# EUROPÄISCHE PATENTSCHRIFT

(11) **EP 4 140 775 B1**
(45) Veröffentlichungstag und Bekanntmachung des Hinweises auf die Patenterteilung: **13.11.2024**
(21) Anmeldenummer: 22184061.4
(22) Anmeldetag: 11.07.2022
(51) Int. Cl.: B60C 11/12, B60C 11/03, B60C 11/11, B60C 11/13

(54) **FAHRZEUGLUFTREIFEN**
PNEUMATIC TYRE
PNEUMATIQUE DE VÉHICULE

(30) Priorität: 26.08.2021 DE 102021209410
(43) Veröffentlichungstag der Anmeldung: 01.03.2023
(73) Patentinhaber: Continental Reifen Deutschland GmbH, 30175 Hannover (DE)
(72) Erfinder: Fuchs, Artur, 30165 Hannover (DE); Brockmann, Jürgen, 30165 Hannover (DE); Heinhaupt, Torsten, 30165 Hannover (DE); Seng, Matthias, 30165 Hannover (DE); Bauer, Claudia, 30165 Hannover (DE); Vennebörger, Martin, 30165 Hannover (DE)
(74) Vertreter: Continental Corporation

(56) Entgegenhaltungen:
- EP-B1- 0 958 945
- EP-B1- 2 560 830
- WO-A1-2022/002425
- DE-A1- 102020 201 635

## Beschreibung

Die Erfindung betrifft einen Fahrzeugluftreifen mit einem Laufstreifen mit Profilpositiven, welche mit in Draufsicht unter einem Winkel von 0° bis 50° zur axialen Richtung verlaufenden Einschnitten versehen sind, welche jeweils eine Breite von 0,4 mm bis 2,0 mm, eine maximale Tiefe von 70% bis 100% der Profiltiefe, einen Einschnittgrund und zwei Einschnittwände mit zumindest einer zur Laufstreifenperipherie beabstandeten, nicht bis zur Laufstreifenperipherie reichenden lokalen Verkeilungsstruktur aufweisen, wobei die Verkeilungsstruktur durch zwei einander gegenüberliegende, korrespondierende, durchgehend gekrümmte Wandabschnitte der Einschnittwände gebildet ist und wobei unstrukturierte Flächen der Einschnittwände an die durchgehend gekrümmten Wandabschnitte angrenzen.

Ein derartiger Fahrzeugluftreifen ist beispielsweise aus der DE 10 2020 201 635 A1 bekannt. Der Reifen weist einen Laufstreifen mit Profilpositiven auf, welche mit in Draufsicht unter einem Winkel von 0° bis 50° zur axialen Richtung verlaufenden Einschnitten versehen sind. Die Einschnittwände der Einschnitte sind jeweils mit einer Verkeilungsstruktur versehen, welche durch durchgehend gekrümmte Wandabschnitte der Einschnittwände gebildet ist. In der Tiefenposition der Verkeilungsstruktur ist ferner eine Einschnittverbreiterung aus zwei einander gegenüberliegenden Vertiefungen ausgebildet. Durch solche Einschnitte sollen unter anderem die Handlingeigenschaften und die Bremsperformance gleichermaßen vorteilhaft beeinflusst sein.

Die WO 2022 002 425 A1, welche einen Stand der Technik nach Art 54(3) EPÜ bildet, offenbart einen Fahrzeugluftreifen mit einem Laufstreifen mit Profilpositiven mit Einschnitten mit jeweils einem mittleren, in Draufsicht wellenförmig verlaufenden Einschnittabschnitt mit einer von der Laufstreifenperipherie ins Innere des Einschnittes hineinragenden, gewellten Verkeilungsstruktur. Die Verkeilungsstruktur schließt an drei aufeinanderfolgende jeweils über eine halbe Wellenlänge reichende Wellenabschnitte des mittleren Einschnittabschnittes an und setzt sich, betrachtet bei Sicht auf die Einschnittwände, aus einer zwischen den beiden äußeren Wellenabschnitten verlaufenden, U-förmigen äußeren Strukturzone und einer von dieser umlaufenen, an den mittleren Wellenabschnitt anschließenden, inneren Strukturzone zusammen.

Aus der EP 2 560 830 B1 ist ein Fahrzeugluftreifen mit einem Laufstreifen mit Profilpositiven mit Einschnitten bekannt, welche sich, im Querschnitt betrachtet, jeweils aus einem radial äußeren Einschnittabschnitt, der in radialer Richtung eine Länge von 50% bis 90% der Tiefe des Einschnittes aufweist, und einem radial inneren Einschnittabschnitt zusammensetzen. Der radial äußere Einschnittabschnitt ist zur radialen Richtung unter einem Winkel von 0° bis 3° und der radial innere Einschnittabschnitt ist zur radialen Richtung unter einem Winkel von 15° bis 45° geneigt. Im Bereich des radial inneren Einschnittabschnittes weist zumindest die eine Einschnittwand, im Querschnitt betrachtet, einen kreisbogenförmig gekrümmt verlaufenden Wandabschnitt auf, wobei eine die Enden des Wandabschnittes verbindende gerade Linie zur radialen Richtung unter einem Winkel von 15° bis 45° verläuft. Der radial äußere Einschnittabschnitt verläuft, im Querschnitt betrachtet, beispielsweise gerade oder wellenförmig. Bei solchen Einschnitten ist die auftretende Kerbwirkung verringert, wodurch die materialermüdende Belastung am Einschnittgrund reduziert und die Haltbarkeit des Einschnittes erhöht ist.

Die EP 0 958 945 B1 offenbart einen Fahrzeugluftreifen mit einem laufrichtungsgebunden ausgeführten Laufstreifen mit Profilpositiven mit jeweils zumindest paarweise angeordneten, in Draufsicht U-förmig verlaufenden Einschnitten, wobei der eine Einschnitt den anderen Einschnitt umläuft. Die freien Enden der U-förmig verlaufenden Einschnitte münden über die auslaufende Kante des zugehörigen Profilpositivs in die jeweils angrenzende Rille. Solche Einschnitte sollen im Hinblick auf die Traktions- und Bremseigenschaften vorteilhaft sein.

Der Erfindung liegt die Aufgabe zugrunde, bei einem Fahrzeugluftreifen der eingangs genannten Art eine Verkeilungsstruktur zur Verfügung zu stellen, mittels welcher die Schnee- und Nässeperformance über den Laufstreifenabrieb optimiert wird, wobei die für die Kraftübertagung auf den Untergrund vorteilhafte Verkeilungswirkung erhalten bleiben soll.

Gelöst wird die gestellte Aufgabe erfindungsgemäß dadurch, dass die Verkeilungsstruktur, bei Sicht auf die Einschnittwände betrachtet, kreissegmentförmig, insbesondere halbkreisförmig, ausgeführt ist und sich aus einer kuppelförmig ausgebauchten, inneren Strukturzone und einer diese U-förmig umlaufenden, entgegengesetzt zur inneren Strukturzone ausgebauchten, äußeren Strukturzone mit zur Laufstreifenperipherie weisenden U-Schenkel zusammensetzt, sodass der durchgehend gekrümmte Wandabschnitt der einen Einschnittwand einen U-förmigen Vorsprung und der durchgehend gekrümmte Wandabschnitt der anderen Einschnittwand einen in den U-förmigen Vorsprung hineinragenden kuppelförmigen Vorsprung mitbegrenzt.

Die erfindungsgemäße Verkeilungsstruktur weist durch ihre speziell ausgeführten Strukturzonen gegenüber bisher bekannten Verkeilungsstrukturen in der Längserstreckung des Einschnittes eine bessere Verkeilungswirkung auf, wodurch die Profilpositive besonders wirkungsvoll gegeneinander stabilisiert und in der Folge die Kraftübertragung bei Lenk-, Brems- und Traktionsvorgängen weiter verbessert ist. Mit fortschreitendem Laufstreifenabrieb tritt die Verkeilungsstruktur mehr in Richtung zur Peripherie des Laufstreifens. Dabei werden einerseits an der Verkeilungsstruktur ausgebildete, ausgeprägt gewellt verlaufende Griffkanten nahe bei oder an der Laufstreifenperipherie zur Verfügung gestellt, welche eine hohe abgewickelte Kantenlänge aufweisen und den mit zunehmendem Laufstreifenabrieb abnehmenden Traktionseigenschaften auf Schnee wirkungsvoll entgegenwirken, wodurch die Traktionseigenschaften auf hohem Niveau gehalten werden. Anderseits verbessert die nun bis zu Laufstreifenperipherie reichende U-förmig umlaufende äußere Strukturzone - bedingt durch ihre U-Form - beim Fahren auf nasser Fahrbahn die Entwässrung der Außenfläche der Profilpositive, was für die Nassgriffeigenschaften von Vorteil ist. Die Verkeilungsstruktur zeigt daher einen doppelten Effekt, verbessert zum einen bei neuem bzw. wenig abgeriebenen Laufstreifen die Kraftübertragung auf den Untergrund und trägt zum anderen bei entsprechend abgeriebenem Laufstreifen zur Aufrechterhaltung einer guten Schnee- und Nässeperformance bei.

Gemäß einer bevorzugten Ausführung ist die komplette Verkeilungsstruktur radial innerhalb eines Tiefenniveaus ausgebildet, welches gegenüber der Laufstreifenperipherie in einer in radialer Richtung ermittelten konstanten Tiefe von zumindest 20%, insbesondere von zumindest 25%, bevorzugt von zumindest 35%, der maximalen Tiefe des Einschnittes verläuft. Die Verkeilungsstruktur kann daher in einem Abstand zu diesem Tiefenniveau oder komplett radial innerhalb dieses Tiefenniveaus ausgebildet sein. Sie reicht in Richtung Laufstreifenperipherie jedoch nicht über dieses Niveau hinaus. Eine in einer solchen "Tiefenposition" ausgebildete Verkeilungsstruktur ist für die Aufrechterhaltung der Traktionseigenschaften auf Schnee mit zunehmenden Laufstreifenabrieb besonders günstig.

Gemäß einer weiteren bevorzugten Ausführung weist die Verkeilungsstruktur eine in radialer Richtung und in Draufsicht senkrecht zur Einschnittmittellinie des Einschnittes verlaufende Symmetrieebene auf. Diese Maßnahme ist im Hinblick auf eine gleichmäßige Wirkungsweise der Verkeilungsstruktur von Vorteil.

Nachfolgend wird auf eine Vielzahl von bevorzugten Ausgestaltungen der letztgenannten bevorzugten Ausführung sowie auf besonders bevorzugte Varianten dieser Ausgestaltungen eingegangen.

Bei einer ersten bevorzugten Ausgestaltung weist die Verkeilungsstruktur, im in der Symmetrieebene liegenden Querschnitt betrachtet, bezogen auf die Einschnittmittelfläche in radialer Richtung eine Höhe von 35% bis 70%, insbesondere von 40% bis 65%, bevorzugt von 45% bis 60%, besonders bevorzugt von 50% bis 60%, der maximalen Tiefe des Einschnittes auf. Dadurch ist die Schnee- und Nässeperformance über den Laufstreifenabrieb weiter optimiert.

Gemäß einer bevorzugten Variante der ersten bevorzugten Ausgestaltung weist die innere Strukturzone, im in der Symmetrieebene liegenden Querschnitt betrachtet, bezogen auf die Einschnittmittelfläche in radialer Richtung eine Höhe von 55% bis 65% der Höhe der Verkeilungsstruktur auf. Die bereits erwähnten, mit zunehmendem Laufstreifenabrieb an die Laufstreifenperipherie tretenden, ausgeprägt gewellt verlaufen Griffkanten bleiben daher vorteilhafterweise entsprechend lange erhalten.

Eine zweite bevorzugte Ausgestaltung ist dadurch gekennzeichnet, dass die innere Strukturzone, im in der Symmetrieebene liegenden Querschnitt betrachtet, ein in einer in radialer Richtung ermittelten konstanten Tiefe durch ihre maximal ausgelenkte Stelle verlaufendes Niveau aufweist, welches die innere Strukturzone in einen radial äußeren Zonenteil und einen radial inneren Zonenteil teilt, wobei, im erwähnten Querschnitt betrachtet, der radial innere Zonenteil - gegenüber dem radial äußeren Zonenteil - bezogen auf die Einschnittmittelfläche schwächer gekrümmt ausgeführt ist.

Gemäß einer ersten bevorzugten Variante der zweiten bevorzugten Ausgestaltung ist der radial innere Zonenteil, im in der Symmetrieebene liegenden Querschnitt betrachtet, gegenüber dem radial äußeren Zonenteil in radialer Richtung länger ausgeführt.

Die bei der zweiten bevorzugten Ausgestaltung und der zugehörigen ersten bevorzugten Variante vorliegende asymmetrische Krümmung des inneren Zonenteils ermöglicht bereits nach geringem Laufstreifenabrieb, nämlich nach Abrieb des kurzen radial äußeren Zonenteiles, eine entsprechend große Amplitude der an Laufstreifenperipherie auftretenden, wellenförmig verlaufenden Kanten. Da die Amplitude unmittelbar mit der Länge der Kante korreliert, ist diese Ausgestaltung für die Schneeperformance von weiterem Vorteil.

Eine zweite bevorzugten Variante der zweiten bevorzugten Ausgestaltung ist dadurch gekennzeichnet, dass der radial innere Zonenteil, im in der Symmetrieebene liegenden Querschnitt betrachtet, eine Krümmung aufweist, welche vom durch die maximal ausgelenkte Stelle verlaufendem Niveau in Richtung zum Einschnittgrund auf progressive Weise zunimmt. Dadurch bleibt eine möglichst lange Kante an der Laufstreifenperipherie über den Laufstreifenabrieb erhalten, was ebenfalls für die Schneeperformance von Vorteil ist.

Gemäß einer dritten bevorzugten Ausgestaltung verläuft die Verkeilungsstruktur am Niveau, welches durch die maximal ausgelenkte Stelle der inneren Strukturzone verläuft, in Form einer harmonischen Welle sowie über 1,5 Wellenlängen.

Gemäß einer bevorzugten Variante der dritten bevorzugten Ausgestaltung beträgt die Wellenlänge der harmonischen Welle 500% bis 1000%, insbesondere 600% bis 800%, der Breite des Einschnittes. Dies ist für die Verkeilungswirkung von weiterem Vorteil.

Gemäß einer weiteren bevorzugten Variante der dritten bevorzugten Ausgestaltung weist die harmonische Welle eine Amplitude von 90% bis 200%, insbesondere von 100% bis 150%, bevorzugt von 115% bis 135%, der Breite des Einschnittes auf. Dies ist ebenfalls für die Verkeilungswirkung von zusätzlichem Vorteil.

Eine weitere bevorzugte Ausführung ist dadurch gekennzeichnet, gekennzeichnet, dass zu den Einschnitten Einschnitte gehören, welche jeweils zwei der Verkeilungsstrukturen aufweisen, wobei sich die eine Verkeilungsstruktur in der einen Einschnitthälfte und die andere Verkeilungsstruktur in der anderen Einschnitthälfte befindet, wobei sich die Eischnitthälften durch Teilung des Einschnittes in Draufsicht ergeben. Dies ermöglicht ein besonders gleichmäßige Verkeilungswirkung über die Einschittlängserstreckung.

Gemäß einer bevorzugten Variante der letztgenannten bevorzugte Ausführung sind die Verkeilungsstrukturen derart ausgebildet, dass diese durch eine Drehung um 180° um eine in radialer Richtung sowie im Bereich zwischen den Verkeilungsstrukturen verlaufende Achse ineinander überführbar sind. Diese Maßnahme verbessert in besonders gleichmäßiger Weise sowohl die Traktion als auch das Bremsverhalten auf Schnee.

Eine weitere bevorzugte Ausführung ist dadurch gekennzeichnet, dass zu den Einschnitten Einschnitte gehören, welche die zugehörigen Profilpositive durchqueren. Durchquerende Einschnitte sind einerseits für die Nässeperformance von Vorteil, da sie die Wasserableitung in die Rillen begünstigen. Anderseits weisen die Profilpositive durch die durchquerenden Einschnitte eine ausgeprägte Biegefähigkeit auf, sodass die Einschnittkanten besser in Schnee eingreifen.

Eine weitere bevorzugte Ausführung ist dadurch gekennzeichnet, dass zu den Einschnitten Einschnitte gehören, welche jeweils einen den Einschnittgrund mitumfassenden, zur radialen Richtung unter einem Winkel von 0° bis 3° verlaufenden, radial inneren Einschnittabschnitt und einen an diesen anschließenden zur radialen Richtung unter einem Winkel von 15° bis 35°, insbesondere von 20° bis 30°, verlaufenden weiteren Einschnittabschnitt aufweisen, wobei sich die Verkeilungsstruktur(en) im radial inneren Einschnittabschnitt befindet bzw. befinden. Ein solcher weiterer Einschnittabschnitt ermöglicht einen für die Schneetraktion besonders vorteilhaften Eingriffswinkel der Einschnittkanten.

Weitere Merkmale, Vorteile und Einzelheiten der Erfindung werden nun anhand der Zeichnung, die schematisch ein Ausführungsbeispiel der Erfindung zeigt, näher erläutert. Dabei zeigen
Fig. 1 eine vereinfachte Draufsicht auf eine Umfangsabschnitt eines Laufstreifens eines Fahrzeugluftreifens mit einer Ausführungsvariante der Erfindung,
Fig. 2 eine vergrößerte Draufsicht auf den im Detail Z₂ der Fig. 1 befindlichen Profilblock des Laufstreifens,
Fig. 3 eine Visualisierung eines im Profilblock aus Fig. 2 ausgebildeten Einschnittes (Abzugskörper des Einschnittes),
Fig. 4 eine Frontansicht auf die Visualisierung des Einschnittes gemäß der in Fig. 3 durch den Pfeil S₄ angedeuteten Sichtrichtung,
Fig. 5 einen Schnitt durch den Einschnitt gemäß der Linie V-V in Fig. 4 mit an den Einschnitt angrenzendem Gummimaterial des Profilblockes,
Fig. 6 einen Schnitt durch den Einschnitt gemäß der Linie VI-VI der Fig. 4 mit an den Einschnitt angrenzendem Gummimaterial des Profilblockes,
Fig. 7 eine Draufsicht auf einen Ausschnitt des Profilblockes aus Fig. 2 im Bereich des Einschnittes, wobei der Profilblock auf das in Fig. 4 gekennzeichnete Niveau N₇ abgerieben ist,
Fig. 8 eine Draufsicht analog zu Fig. 7, wobei der Profilblock auf das in Fig. 4 gekennzeichnete Niveau Ns abgerieben ist,
Fig. 9 eine Draufsicht analog zu Fig. 7, wobei der Profilblock auf das in Fig. 4 gekennzeichnete Niveau N₉ abgerieben ist,
Fig. 10 den Querschnitt aus Fig. 6 in vergrößerter Darstellung und
Fig. 11 eine in ihrer Größe zu Fig. 10 passende Ansicht des Details Z₁₁ aus Fig. 8.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Leichte LKWs mit zGM ≤ 7,5 t), wobei die Reifen insbesondere für den Ganzjahreseinsatz vorgesehen sind.

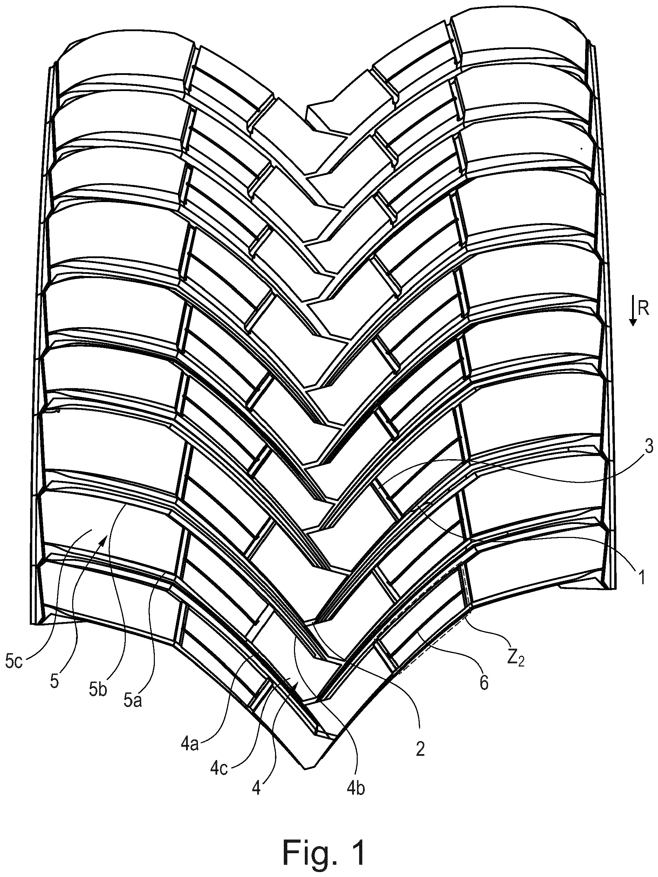

Fig. 1 zeigt eine Draufsicht auf einen Umfangsabschnitt eines zu einem Fahrzeugluftreifen gehörenden Laufstreifens mit einer laufrichtungsgebunden ausgeführten Profilierung, wobei der Fahrzeugluftreifen derart am Fahrzeug zu montieren ist, dass er die durch den Pfeil R angedeutete Abrollrichtung bei Vorwärtsfahrt aufweist.

Der Laufstreifen weist in jeder Laufstreifenhälfte in Draufsicht parallel zueinander und vorzugsweise leicht gebogen verlaufende Schrägrillen 1 auf, welche sich vom Bereich der Reifenäquatorialebene bis zu den Laufstreifenrändern erstrecken, insgesamt V-förmig über die Laufstreifenbreite verlaufen, zumindest über den Großteil ihrer Erstreckung auf die jeweils vorgesehene Profiltiefe von insbesondere 6,0 mm bis 9,5 mm ausgeführt und somit die Haupt(entwässerungs)rillen des Laufstreifens sind, wobei die in unterschiedlichen Laufstreifenhälften verlaufenden Schrägrillen 1 in Umfangsrichtung zueinander versetzt sind. Der Ausdruck "Profiltiefe" bezeichnet bei Laufstreifen mit verschieden tief ausgeführten Haupt(entwässerungs)rillen die Tiefe der am tiefsten ausgeführten Haupt(entwässerungs)rille(n). An das laufstreifeninnenseitige Ende jeder Schrägrille 1 schließt eine einschnittartige Rille 2 an, welche in die jeweilige in der anderen Laufstreifenhälfte verlaufende Schrägrille 1 einmündet. Ferner verlaufen in jeder Laufstreifenhälfte zwischen in Umfangsrichtung benachbarten Schrägrillen 1 jeweils zwei Kurzrillen 3, welche bezüglich der Umfangsrichtung gegensinnig zu den Schrägrillen 1 geneigt sind.

Die Schrägrillen 1 und die Kurzrillen 3 gliedern den Laufstreifen in mittlere Profilblöcke 4 und in zu schulterseitigen Profilblockreihen gehörende schulterseitige Profilblöcke 5. Die Schrägrillen 1 erstrecken sich im Bereich der mittleren Profilblöcke 4 in Draufsicht zur axialen Richtung unter einem Winkel von bis zu 50° und im Bereich der schulterseitigen Profilblöcke 5 zur axialen Richtung unter einem Winkel von 0° bis 20°.

Jeder Profilblock 4, 5 weist an der Laufstreifenperipherie eine Blockaußenfläche 4c (Profilblock 4), 5c (Profilblock 5), eine an der einen angrenzenden Schrägrille 1 ausgebildete, einlaufende Blockkante 4a (Profilblock 4), 5a (Profilblock 5) und eine an der anderen angrenzenden Schrägrille 1 ausgebildete, auslaufende Blockkante 4b (Profilblock 4), 5b (Profilblock 5) auf, wobei beim Abrollen des Reifens bei Vorwärtsfahrt (Pfeil R) die einlaufende Blockkante 4a, 5a vor der auslaufenden Blockkante 4b, 5b in den Untergrund eintritt. Die weiter laufstreifenaußenseitig befindlichen, mittleren Profilblöcke 4 sind jeweils mit einem von der Blockaußenfläche 4c ausgehenden Einschnitt 6 versehen. Bevorzugter Weise sind auch die weiteren Profilblöcke 4, 5 jeweils mit einem Einschnitt 6 versehen.

Die weitere Ausgestaltung der Einschnitte 6 wird nachfolgend anhand eines einzelnen Einschnittes 6 erläutert.

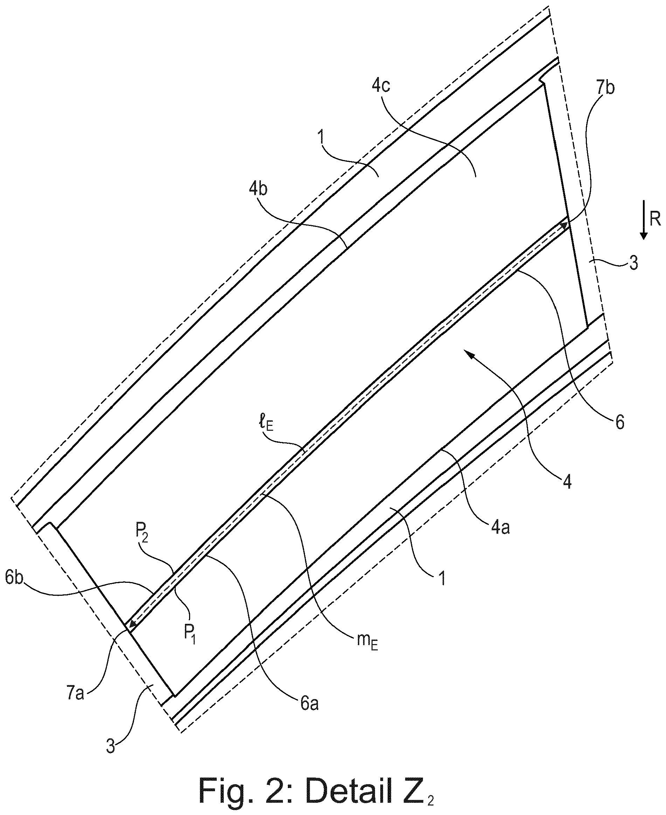

Fig. 2 zeigt eine Draufsicht auf einen mittleren Profilblock 4 mit einem Einschnitt 6 sowie Teilbereiche der an den Profilblock 4 angrenzenden Schrägrillen 1 und Teilbereich der an den Profilblock 4 angrenzenden Kurzrillen 3. Der Einschnitt 6 durchquert den Profilblock 4 in Längserstreckung, weist eine in Draufsicht dem Einschnittverlauf folgende, leicht gebogen verlaufende Einschnittmittellinie m_{E} auf, verläuft in Draufsicht bezüglich der axialen Richtung übereinstimmend zu den Blockkanten 4a, 4b geneigt sowie - bezogen auf die Einschnittmittellinie m_{E} - vorzugsweise parallel bzw. im Wesentlichen parallel zu den Blockkanten 4a, 4b, weist an der Blockaußenfläche 4c eine beim Abrollen des Reifens bei Vorwärtsfahrt (Pfeil R) zuerst in den Untergrund eintretende, einlaufende Einschnittkante 6a und eine auslaufende Einschnittkante 6b sowie ein beim Abrollen des Reifens bei Vorwärtsfahrt zuerst in den Untergrund eintretendes, laufstreifeninnenseitiges, einlaufendes Einschnittende 7a und ein laufstreifenaußenseitiges, auslaufendes Einschnittende 7b auf. Beim Abrollen des Reifens bei Vorwärtsfahrt treten auf der einlaufenden Einschnittkante 6a liegende Punkte P₁ jeweils vor dem exakt in Umfangsrichtung gegenüberliegenden, auf der auslaufenden Einschnittkante 6b liegenden Punkt P₂ in den Untergrund ein. In Fig. 2 sind zwei solcher Punkte P₁, P₂ exemplarisch eingezeichnet.

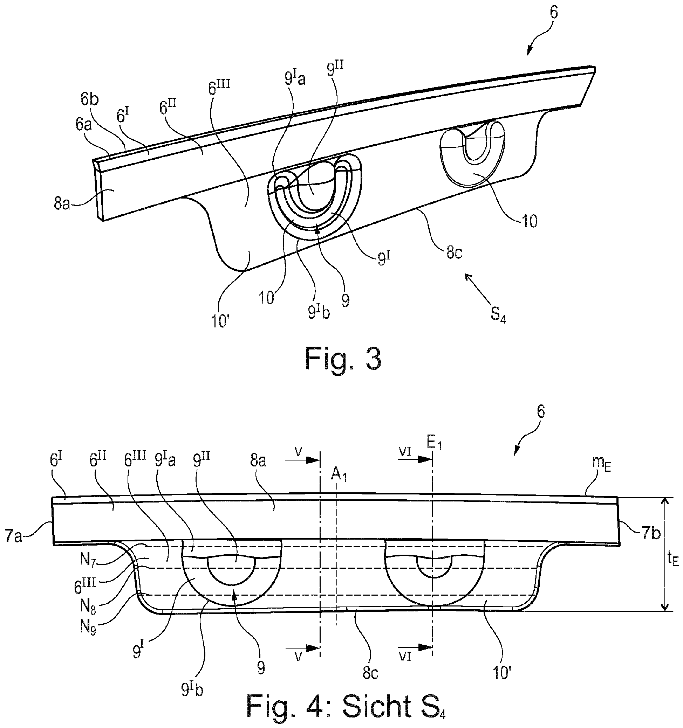

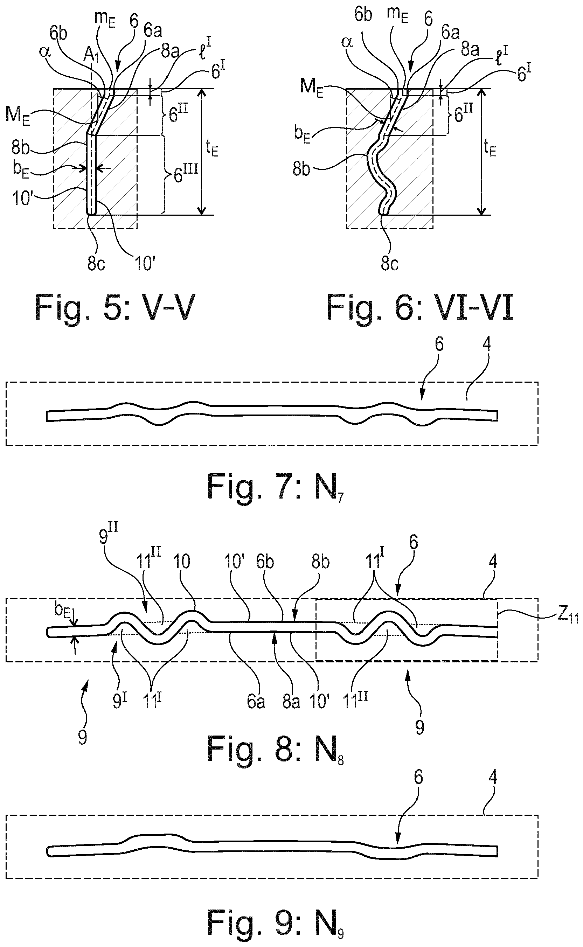

Wie insbesondere Fig. 3, Fig. 5 und Fig. 6 in Kombination zeigen, ist der Einschnitt 6 durch eine von der einlaufenden Einschnittkante 6a ausgehende Einschnittwand 8a, eine von der auslaufenden Einschnittkante 6b ausgehende Einschnittwand 8b (Fig. 5, Fig. 6) sowie einen Einschnittgrund 8c begrenzt und weist eine von der Einschnittmittellinie m_{E} ausgehende, übereinstimmend zu den Einschnittwänden 8a, 8b beabstandete Einschnittmittelfläche M_{E} (Fig. 5, Fig. 6: gestrichelt eingezeichnet), eine an der Blockaußenfläche 4c entlang der bereits erwähnten Einschnittmittellinie m_{E} ermittelte Länge l_{E} (Fig. 2), eine zwischen sowie senkrecht zu den Einschnittwänden 8a, 8b ermittelte, konstante Breite b_{E} (Fig. 5, Fig. 6) von 0,4 mm bis 2,0 mm, insbesondere von bis zu 1,2 mm, besonders bevorzugt von bis zu 0,8 mm, und zumindest über den Großteil seiner Länge l_{E} eine in radialer Richtung ermittelte konstante maximale Tiefe t_{E} (Tiefe an der jeweils tiefsten Stelle, Fig. 4 bis Fig. 6) von 70% bis 100%, insbesondere von höchstens 95%, der Profiltiefe auf. Gemäß Fig. 4 verläuft der Einschnittgrund 8c auf der maximalen Tiefe t_{E} und erstreckt sich somit zumindest über den Großteil der Länge l_{E} (Fig. 2), insbesondere über zumindest 55%, bevorzugt über zumindest 60%, der Länge l_{E} (Fig. 2), und endet beim gezeigten Ausführungsbeispiel an in an sich bekannter Weise seichter ausgeführten, randseitigen Einschnittbereichen.

Gemäß Fig. 3 und Fig. 4 setzt sich der Einschnitt 6 in jenem Bereich, in welchem er auf die maximale Tiefe t_{E} (Fig. 4) reicht, in radialer Richtung aus einem radial äußeren Einschnittabschnitt 6^{I}, einem mittleren Einschnittabschnitt 6^{II} und einem bis zum Einschnittgrund 8c reichenden, radial inneren Einschnittabschnitt 6^{III} zusammen. In den erwähnten, seichter ausgeführten, randseitigen Einschnittbereichen sind insbesondere ausschließlich der radial äußere Einschnittabschnitt 6^{I} und der mittlere Einschnittabschnitt 6^{II} vorhanden.

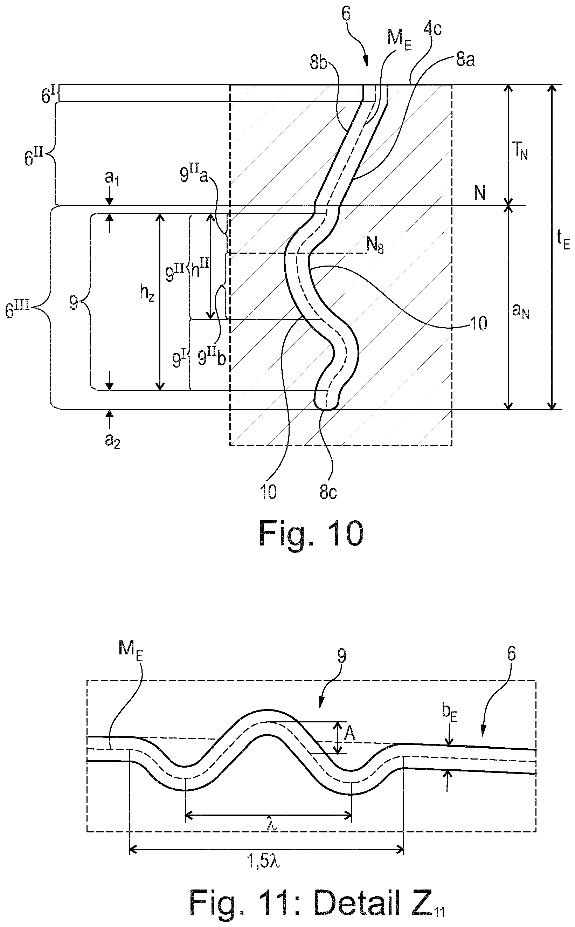

Wie Fig. 5 und Fig. 6 zeigen, verläuft der radial äußere Einschnittabschnitt 6^{I} (in Fig. 5 und Fig. 6 kaum erkennbar), im in Draufsicht senkrecht zur Einschnittmittellinie m_{E} (Fig. 2) ausgerichteten Querschnitt betrachtet (vergl. Lage der Schnittlinien V-V und VI-VI in Fig. 4), in radialer Richtung und weist eine auf die Einschnittmittelfläche M_{E} bezogene, in radialer Richtung ermittelte Länge l^{I} von vorzugsweise 0,5 mm bis 1,5 mm auf. Der mittlere Einschnittabschnitt 6^{II} verläuft, im erwähnten Querschnitt betrachtet, gerade sowie zur radialen Richtung unter einem Winkel α von 15° bis 35°, insbesondere von 20° bis 30°. Gemäß Fig. 3 und Fig. 4 weist der radial innere Einschnittabschnitt 6^{III} zwei lokale Verkeilungsstrukturen 9 auf, auf deren Ausgestaltung noch genauer eingegangen wird. Wie Fig. 5 zeigt, verläuft der radial innere Einschnittabschnitt 6^{III} im Bereich außerhalb der Verkeilungsstrukturen 9, im erwähnten Querschnitt betrachtet, in radialer Richtung, alternativ zu dieser unter einem Winkel von bis zu 3°, wobei der radial innere Einschnittabschnitt 6^{III} bezüglich der radialen Richtung gleich- oder gegensinnig zum mittleren Einschnittabschnitt 6^{II} geneigt sind kann. Gemäß Fig. 10, welche eine Vergrößerung der Fig. 6 ist, definiert der Anschlussbereich des radial inneren Einschnittabschnittes 6^{III} an den mittlere Einschnittabschnitt 6^{II} ein auf die Einschnittmittelfläche M_{E} bezogenes Tiefenniveau N, welches sich gegenüber der Blockaußenfläche 4c in einer in radialer Richtung ermittelten konstanten Tiefe T_{N} und vom Niveau der maximalen Tiefe t_{E} des Einschnittes 6 in einem in radialer Richtung ermittelten Abstand a_{N} befindet. Die Verkeilungsstrukturen 9 befinden sich daher radial innerhalb des Tiefenniveaus N, wobei die zugehörige Tiefe T_{N} zumindest 20%, insbesondere zumindest 25%, bevorzugt zumindest 35%, der maximalen Tiefe t_{E} beträgt. Der erwähnte Abstand a_{N} resultiert aus der Differenz der maximalen Tiefe t_{E} des Einschnittes 6 und der Tiefe T_{N} des Tiefenniveaus N.

Gemäß Fig. 3 und Fig. 10 sind die Verkeilungsstrukturen 9 jeweils von zwei einander gegenüberliegenden, korrespondierend ausgebildeten, speziell durchgehend gekrümmten Wandabschnitten 10 der Einschnittwände 8a, 8b gebildet bzw. begrenzt. Im Bereich außerhalb der Wandabschnitte 10 sind die Einschnittwände 8a, 8b unstrukturierte Flächen 10` (Fig. 3), also Flächen, welche frei von Vorsprüngen und/oder Vertiefungen sind. "Durchgehend gekrümmt" bedeutet, dass die Wandabschnitte 10 in ihrem Inneren frei von Knickstellen (Kanten) und Spitzen sind, sodass in jedem Punkt auf einem Wandabschnitt 10 eine Tangentialebene existiert. "Korrespondierend" bedeutet, dass die Breite b_{E} des Einschnittes 6 im Bereich der Wandabschnitte 10 konstant ist oder fertigungsbedingt um höchstens 0,1 mm variiert. Beim gezeigten Ausführungsbeispiel sind die Wandabschnitte 10 ferner derart gestaltet, dass diese stetig ("knickfrei", "kantenfrei") in die unstrukturierten Flächen 10' übergehen. "Stetig übergehen" bedeute, dass in jedem Punkt am Übergang eines Wandabschnittes 10 zur entsprechenden unstrukturierten Fläche 10` eine Tangentialebene existiert.

In Fig. 4 und Fig. 5 ist eine Achse A₁ eingezeichnet, welche - wie Fig. 4 zeigt - bei senkrechter Sicht auf die unstrukturierten Flächen 10` senkrecht zur Einschnittmittellinie m_{E} sowie durch die Mitte der Einschnittmittellinie m_{E} (fällt in Fig. 4 mit den Einschnittkanten 6a, 6b zusammen) verläuft und welche ferner- wie Fig. 5 zeigt - im in Draufsicht senkrecht zur Einschnittmittellinie m_{E} ausgerichteten Querschnitt betrachtet, im radial inneren Einschnittabschnitt 6^{III} mittig zwischen den unstrukturierten Flächen 10', d.h. im radial inneren Einschnittabschnittes 6^{III} in der Einschnittmittelfläche M_{E}, verläuft.

Gemäß Fig. 4 befinden sich die Verkeilungsstrukturen 9 an unterschiedlichen Seiten der Achse A₁, sodass die eine Verkeilungsstruktur 9 in der einen Einschnitthälfte und die andere Verkeilungsstruktur 9 in der anderen Einschnitthälfte ausgebildet ist, wobei sich die Verkeilungsstrukturen 9 in übereinstimmenden Abständen zur Achse A₁ befinden. Die Verkeilungsstrukturen 9 sind derart ausgebildet, dass, unter Vernachlässigung des in Draufsicht gebogenen Verlaufes des Einschnittes 4 (siehe Fig. 2), die Verkeilungsstrukturen 9 durch eine 180°-Drehung um die Achse A₁ ineinander überführbar sind (vergl. Fig. 3).

Die weitere Ausgestaltung der Verkeilungsstrukturen 9 wird nachfolgend insbesondere unter Bezugnahme auf eine einzelne Verkeilungsstruktur 9 sowie unter Zuhilfenahme von Fig. 7 bis Fig. 9, welche Draufsichten auf den Profilblock 4 im Bereich des Einschnittes 6 zeigen und in welchen der Profilblock 4 auf die in Fig. 4 gekennzeichneten Niveaus N₇, N₈, N₉ abgerieben ist. Das Niveau Ns ist ferner in Fig. 10 eingezeichnet.

Wie Fig. 3 und Fig. 4 in Kombination zeigen, ist die Verkeilungsstruktur 9 bei Sicht auf die Einschnittwände 8a, 8b kreissegmentförmig, insbesondere halbkreisförmig, wobei die Kreissehne der Blockaußenfläche 4c (vergl. Fig. 2) und den Einschnittkanten 6a, 6b zugewandt ist sowie parallel zur Blockaußenfläche 4c und den Einschnittkanten 6a, 6b ausgerichtet ist und wobei der Kreisbogen dem Einschnittgrund 8c zugewandt ist. Die Verkeilungsstruktur 9 setzt sich aus einer U-förmig verlaufenden, ausgebauchten, äußeren Strukturzone 9^{I} und einer von dieser umlaufenen, zur äußeren Strukturzone 9^{I} entgegengesetzt und kuppelförmig ausgebauchten, inneren Strukturzone 9^{II} zusammen, wobei die freien Enden der U-Schenkel der äußeren Strukturzone 9^{I} zur Blockaußenfläche 4c und den Einschnittkanten 6a, 6b weisen. Bevorzugter Weise beginnen die äußere Strukturzone 9^{I} und die innere Strukturzone 9^{II} gemeinsam in einer in radialer Richtung ermittelten konstanten Tiefe (Fig. 4).

Gemäß Fig. 4 weist die Verkeilungsstruktur 9 eine in radialer Richtung und in Draufsicht (nicht gezeigt) senkrecht zur Einschnittmittellinie m_{E} verlaufende Symmetrieebene E₁ auf. Gemäß Fig. 10 weist die Verkeilungsstruktur 9, im in der Symmetrieebene E₁ liegenden Querschnitt betrachtet (vergl. Fig. 6 und Lage der Schnittlinie VI-VI in Fig. 4), entsprechend der erwähnten Gestalt der Strukturzonen 9^{I}, 9^{II}, einen S-förmig geschwungen Verlauf auf. Die Verkeilungsstruktur 9 endet beim gezeigten Ausführungsbeispiel, im in der Symmetrieebene E₁ liegenden Querschnitt sowie in parallel zur Symmetrieebene E₁ ausgerichteten Querschnittebenen betrachtet und bezogen auf die Einschnittmittelfläche M_{E}, vor dem Tiefenniveau N in einem radialer Richtung ermittelten Abstand a₁ von zumindest 0,1 mm und weist zum Niveau des Einschnittgrundes 8c in radialer Richtung einen Abstand a₂ von zumindest 0,1 mm auf. Alternativ kann die Verkeilungsstruktur 9 bis zum Niveau des Einschnittgrundes 8c und/oder bis zum Tiefenniveau N reichen.

Die Verkeilungsstruktur 9 weist in der Symmetrieebene E₁ in radialer Richtung eine auf die Einschnittmittelfläche M_{E} bezogene Höhe hz von 35% bis 70%, insbesondere von 40% bis 65%, bevorzugt von 45% bis 60%, besonders bevorzugt von 50% bis 60%, der maximalen Tiefe t_{E} auf, wobei die Höhe hz beim Ausführungsbeispiel auf die Abstände a_{N}, a₁ und a₂ entsprechend abgestimmt ist.

Jede Strukturzone 9^{I}, 9^{II} ist von einem gegenüber der jeweiligen unstrukturierten Fläche 10` der einen Einschnittwand 8a, 8b abragenden Vorsprung 11^{I} (äußere Strukturzone 9^{I}, Fig. 8), 11^{II} (innere Strukturzone 9^{II}, Fig. 8) und einer gegenüber der unstrukturierten Fläche 10` der jeweils anderen, zweiten Einschnittwand 8a, 8b eingebuchteten, mit dem Vorsprung 11^{I}, 11^{II} korrespondierenden Vertiefung gebildet. Entsprechend der erwähnten Form der Strukturzonen 9^{I}, 9^{II} ist der Vorsprung 11^{I} U-förmig und der Vorsprung 11^{II} kuppelförmig. Da die innere Strukturzone 9^{II} zur äußeren Strukturzone 9^{I}, wie ebenfalls bereits erwähnt, entgegengesetzt ausgebaucht ist, befindet sich bei jeder Verkeilungsstruktur 9 der U-förmige Vorsprung 11^{I} an der einen Einschnittwand 8a bzw. 8b und der kuppelförmige Vorsprung 11^{II} an der jeweils anderen Einschnittwand 8a bzw. 8b, wobei der kuppelförmige Vorsprung 11^{II} in die U-Form des U-förmigen Vorsprung 11^{I} hineinragt. Der U-förmige Vorsprung 11^{I} ist somit gemeinsam mit der an derselben Einschnittwand 8a, 8b befindlichen Vertiefung, welche mit dem an der jeweils anderen Einschnittwand 8a bzw. 8b befindlichen kuppelförmigen Vorsprung 11^{II} korrespondiert, von einem der bereits erwähnten, durchgehend gekrümmten Wandabschnitte 10 (Fig. 3, Fig. 8) der Verkeilungsstruktur 9 begrenzt. In analoger Weise ist der kuppelförmige Vorsprung 11^{II} gemeinsam mit der an derselben Einschnittwand 8a, 8b befindlichen Vertiefung, welche mit dem an der jeweils anderen Einschnittwand 8a bzw. 8b befindlichen U-förmigen Vorsprung 11^{I} korrespondiert, von dem anderen durchgehend gekrümmten Wandabschnitt 10 (Fig. 3, Fig. 8) der Verkeilungsstruktur 9 begrenzt.

Wie Fig. 8 zeigt, ist bei der näher zum einlaufenden Einschnittende 7a (vergl. Fig. 4) befindlichen Verkeilungsstruktur 9 der U-förmige Vorsprung 11^{I} an der von der einlaufenden Einschnittkante 6a ausgehenden Einschnittwand 8a ausgebildet und bei der näher zum laufstreifenaußenseitigen Einschnittende 7b (vergl. Fig. 4) befindlichen Verkeilungsstruktur 9 ist der U-förmige Vorsprung 11^{I} an der von der auslaufenden Einschnittkante 6b ausgehenden Einschnittwand 8b ausgebildet.

Wie Fig. 10 zeigt, verläuft die innere Strukturzone 9^{II} - entsprechend ihrer kuppelförmig ausgebauchten Form - im in der Symmetrieebene E₁ liegenden Querschnitt betrachtet, bogenförmig, weist bezogen auf die Einschnittmittelfläche M_{E} in radialer Richtung eine Höhe h" von 55% bis 65% der Höhe hz der Verkeilungsstruktur 9 auf und definiert ein in einer in radialer Richtung ermittelten konstanten Tiefe durch ihre maximal ausgelenkte Stelle verlaufendes Niveau Ns. Die innere Strukturzone 9^{II} ist somit, im in der Symmetrieebene E₁ liegenden Querschnitt betrachtet, am Niveau N₈ - bezogen auf die Einschnittmittelfläche M_{E} und ermittelt senkrecht zum Niveau der an die innere Strukturzone 9^{II} angrenzenden unstrukturierten Flächen 10` (Fig. 3) der Einschnittwände 8a, 8b - am stärksten ausgelenkt (vergl. Fig. 3). Das Niveau Ns "teilt" die innere Strukturzone 9^{II} in einen radial äußeren Zonenteil 9^{II}a und einen radial inneren Zonenteil 9^{II}b. Der radial innere Zonenteil 9^{II}b ist - jeweils gegenüber dem radial äußeren Zonenteil 9^{II}a im in der Symmetrieebne E₁ liegenden Querschnitt betrachtet und bezogen auf die Einschnittmittelfläche M_{E} - schwächer gekrümmt und in radialer Richtung länger ausgeführt. Der radial innere Zonenteil 9^{II}b weist ferner, im erwähnten Querschnitt betrachtet, eine ausgehend vom Niveau Ns in Richtung zum Einschnittgrund 8c progressiv zunehmende Krümmung auf, sodass die Krümmung zunächst nur wenig und dann auf stärkere Weise zunimmt. Der radial äußere Zonenteil 9^{II}a weist, im erwähnten Querschnitt betrachtet, eine im Wesentlichen konstante Krümmung auf. Unter der "Krümmung" wird bekannter Weise der Kehrwert des Krümmungsradius verstanden, wobei der Krümmungsradius der Radius jenes Kreises ist, durch den im in der Symmetrieebne E₁ liegenden Querschnitt betrachtet, der jeweilige Punkt auf der Symmetrieebene E₁ am besten angenähert ist.

Gemäß Fig. 3 und Fig. 4 ist die äußere Strukturzone 9^{I} durch das Niveau Ns (Fig. 10) in einen bei senkrechter Sicht auf die Einschnittwände 8a, 8b halbkreisförmig verlaufenden radial inneren Zonenteil 9'b und zwei kurze in radialer Richtung verlaufende radial äußere Zonenteile 9^{I}a geteilt. Der radial innere Zonenteil 9^{I}b verläuft, im Querschnitt senkrecht zu seiner U-Form betrachtet, also beispielsweise im in der Symmetrieebene E₁ liegenden Querschnitt betrachtet, gleichbleibend kreisbogenförmig (siehe Fig. 3 in Kombination mit Fig. 10, radial innerer Zonenteil 9'b in Fig. 10 nicht beziffert).

Gemäß Fig. 11 verläuft die Verkeilungsstruktur 9 am Niveau N₈, in Draufsicht auf das Niveau Ns betrachtet, in Form einer harmonischen Welle mit einer Wellenlänge λ und einer Amplitude A, welche jeweils auf die Einschnittmittelfläche M_{E} bezogen sind, und entsprechend der Form einer harmonischen Welle am Niveau Ns konstant sind. Die Verkeilungsstruktur 9 verläuft am Niveau Ns gemäß der Gestalt ihrer Strukturzonen 9^{I}, 9^{II} (Fig. 3, Fig. 4) über 1,5 Wellenlängen λ. Die Amplitude A beträgt am Niveau Ns 90% bis 200%, insbesondere 100% bis 150%, bevorzugt von 115% bis 135%, der Breite b_{E} des Einschnittes 6 und die Wellenlänge λ beträgt am Niveau N₈ 500% bis 1000%, insbesondere 600% bis 800%, der Breite b_{E} des Einschnittes 6.

Die Erfindung ist auf das beschriebene Ausführungsbeispiel nicht beschränkt, sondern auf den beanspruchten Gegenstand.

Die Einschnitte weisen jeweils zumindest eine Verkeilungsstruktur auf und können insbesondere bis zu drei Verkeilungsstrukturen aufweisen. Ferner können die Einschnitte mit den Verkeilungsstrukturen auch in in Umfangsrichtung umlaufenden Profilrippen ausgebildet sein, wobei die Einschnitte innerhalb der Profilrippen bzw. innerhalb der Profilblöcke ein- oder beidseitig enden können. Die Einschnitte können auch in schulterseitigen Profilblöcken oder in schulterseitigen Profilrippen vorgesehen sein, wobei es bevorzugt ist, wenn sich die Verkeilungsstruktur(en) innerhalb der Bodenaufstandsfläche (entspricht dem statisch ermittelten Footprint bei einer Last von 70 % der maximalen Tragfähigkeit bei einem Innendruck von 85 %, ermittelt gemäß E.T.R.T.O.-Standards) des Laufstreifens befindet bzw. befinden. Die angehobenen, randseitigen Einschnittbereiche sind optional, sodass der Einschnitt über seine gesamte Erstreckung (Länge l_{E}) auf die maximale Tiefe t_{E} reichen kann. Alternativ ist es bevorzugt, wenn sich die Verkeilungsstruktur(en) in einem auf die maximale Tiefe ausgeführten Einschnittbereich befindet bzw. befinden, wobei sich der Einschnitt bei dieser Variante in Draufsicht aus aneinander anschließenden Einschnittbereichen zusammensetzt. Der radial äußere Einschnittabschnitt 6^{I} und der mittlere Einschnittabschnitt 6^{II} sind ebenfalls optional, sodass bei dieser Ausführung der Einschnitt 6, im Querschnitt und in radialer Richtung betrachtet, keine Einschnittabschnitte aufweist bzw. lediglich aus einem einzigen "Einschnittabschnitt" gebildet ist. Die Einschnitte verlaufen in Draufsicht zur axialen Richtung unter einem Winkel von 0° bis 50°, wobei sich der Winkel bei nicht gerade verlaufenden Einschnitten auf eine in Draufsicht die Enden der Einschnittmittellinie verbindende gerade Linie bezieht. Bevorzugter Weise verlaufen die Einschnitte in Draufsicht zumindest über den Großteil ihrer Länge gerade oder durchgehend gebogen, also kreisbogenförmig, wobei sich die Verkeilungsstruktur(en) insbesondere im gerade bzw. gebogen verlaufenden Abschnitt befinden. Der Laufstreifen muss nicht laufrichtungsgebunden ausgeführt sein.

### Bezugszeichenliste

- 1: Schrägrille
- 2: Rille
- 3: Kurzrille
- 4: mittlerer Profilblock
- 4a: einlaufende Blockkante
- 4b: auslaufende Blockkante
- 4c: Blockaußenfläche
- 5: schulterseitiger Profilblock
- 5a: einlaufende Blockkante
- 5b: auslaufende Blockkante
- 5c: Blockaußenfläche
- 6: Einschnitt
- 6a: einlaufende Einschnittkante
- 6b: auslaufende Einschnittkante
- 6^{I}: radial äußerer Einschnittabschnitt
- 6^{II}: mittlerer Einschnittabschnitt
- 6^{III}: radial innerer Einschnittabschnitt
- 7a: einlaufendes Einschnittende
- 7b: auslaufendes Einschnittende
- 8a: Einschnittwand
- 8b: Einschnittwand
- 8c: Einschnittgrund
- 9: Verkeilungsstruktur
- 9^{I6}: äußere Strukturzone
- 9^{I}a: radial äußerer Zonenteil
- 9^{I}b: radial innerer Zonenteil
- 9^{II}: innerer Strukturzone
- 9^{II}a: radial äußerer Zonenteil
- 9^{II}b: radial innerer Zonenteil
- 10: Wandabschnitt
- 10': unstrukturierte Fläche
- 11^{I}, 11^{II}: Vorsprung
- A: Amplitude
- A₁: Achse
- a_{N}, a₁, a₂: Abstand
- b_{E}: Breite
- E₁: Symmetrieebene
- h", hz: Höhe
- l_{E}, l^{I}: Länge
- m_{E}4: Einschnittmittellinie
- M_{E}: Einschnittmittelfläche
- N: Tiefenniveau
- N₇, N₈, N₉: Niveau
- P₁, P₂: Punkt
- R: Pfeil (Abrollrichtung)
- S₄: Pfeil (Sichtrichtung)
- t_{E}: maximale Tiefe
- T_{N}: Tiefe
- Z₂, Z₁₁: Detail
- α: Winkel
- λ: Wellenlänge

## Patentansprüche

1. Fahrzeugluftreifen mit einem Laufstreifen mit Profilpositiven (4, 5), welche mit in Draufsicht unter einem Winkel von 0° bis 50° zur axialen Richtung verlaufenden Einschnitten (6) versehen sind, welche jeweils eine Breite (b_{E}) von 0,4 mm bis 2,0 mm, eine maximale Tiefe (t_{E}) von 70% bis 100% der Profiltiefe, einen Einschnittgrund (8c) und zwei Einschnittwände (8a, 8b) mit zumindest einer zur Laufstreifenperipherie beabstandeten, nicht bis zur Laufstreifenperipherie reichenden lokalen Verkeilungsstruktur (9) aufweisen, wobei die Verkeilungsstruktur (9) durch zwei einander gegenüberliegende, korrespondierende, durchgehend gekrümmte Wandabschnitte (10) der Einschnittwände (8a, 8b) gebildet ist und wobei unstrukturierte Flächen (10') der Einschnittwände (8a, 8b) an die durchgehend gekrümmten Wandabschnitte (10) angrenzen,
**dadurch gekennzeichnet,**
**dass** die Verkeilungsstruktur (9), bei Sicht auf die Einschnittwände (8a, 8b) betrachtet, kreissegmentförmig, insbesondere halbkreisförmig, ausgeführt ist und sich aus einer kuppelförmig ausgebauchten, inneren Strukturzone (9^{II}) und einer diese U-förmig umlaufenden, entgegengesetzt zur inneren Strukturzone (9^{II}) ausgebauchten, äußeren Strukturzone (9^{I}) mit zur Laufstreifenperipherie weisenden U-Schenkel zusammensetzt, sodass der durchgehend gekrümmte Wandabschnitt (10) der einen Einschnittwand (8a, 8b) einen U-förmigen Vorsprung (11^{II}) und der durchgehend gekrümmte Wandabschnitt (10) der anderen Einschnittwand (8a, 8b) einen in den U-förmigen Vorsprung (11^{II}) hineinragenden kuppelförmigen Vorsprung (11^{I}) mitbegrenzt.

2. Fahrzeugluftreifen nach Anspruch 1, **dadurch gekennzeichnet, dass** die komplette Verkeilungsstruktur (9) radial innerhalb eines Tiefenniveaus (N) ausgebildet ist, welches gegenüber der Laufstreifenperipherie in einer in radialer Richtung ermittelten konstanten Tiefe (T_{N}) von zumindest 20%, insbesondere von zumindest 25%, bevorzugt von zumindest 35%, der maximalen Tiefe (t_{E}) des Einschnittes (6) verläuft.

3. Fahrzeugluftreifen nach Anspruch 1 oder 2, **dadurch gekennzeichnet, dass** die Verkeilungsstruktur (9) eine in radialer Richtung und in Draufsicht senkrecht zur Einschnittmittellinie (m_{E}) des Einschnittes (6) verlaufende Symmetrieebene (E₁) aufweist.

4. Fahrzeugluftreifen nach Anspruch 3, **dadurch gekennzeichnet, dass** die Verkeilungsstruktur (9), im in der Symmetrieebene (E₁) liegenden Querschnitt betrachtet, bezogen auf die Einschnittmittelfläche (M_{E}) in radialer Richtung eine Höhe (hz) von 35% bis 70%, insbesondere von 40% bis 65%, bevorzugt von 45% bis 60%, besonders bevorzugt von 50% bis 60%, der maximalen Tiefe (t_{E}) des Einschnittes (6) aufweist.

5. Fahrzeugluftreifen nach Anspruch 4, **dadurch gekennzeichnet, dass** die innere Strukturzone (9^{II}), im in der Symmetrieebene (E₁) liegenden Querschnitt betrachtet, bezogen auf die Einschnittmittelfläche (M_{E}) in radialer Richtung eine Höhe (h^{II}) von 55% bis 65% der Höhe (hz) der Verkeilungsstruktur (9) aufweist.

6. Fahrzeugluftreifen nach einem der Ansprüche 3 bis 5, **dadurch gekennzeichnet, dass** die innere Strukturzone (9^{II}), im in der Symmetrieebene (E₁) liegenden Querschnitt betrachtet, ein in einer in radialer Richtung ermittelten konstanten Tiefe durch ihre maximal ausgelenkte Stelle verlaufendes Niveau (N₈) aufweist, welches die innere Strukturzone (9^{II}) in einen radial äußeren Zonenteil (9^{II}a) und einen radial inneren Zonenteil (9"b) teilt, wobei, im erwähnten Querschnitt betrachtet, der radial innere Zonenteil (9"b) - gegenüber dem radial äußeren Zonenteil (9^{II}a) - bezogen auf die Einschnittmittelfläche (M_{E}) schwächer gekrümmt ausgeführt ist.

7. Fahrzeugluftreifen nach Anspruch 6, **dadurch gekennzeichnet, dass** der radial innere Zonenteil (9"b), im in der Symmetrieebene (E₁) liegenden Querschnitt betrachtet, gegenüber dem radial äußeren Zonenteil (9"a) in radialer Richtung länger ausgeführt ist.

8. Fahrzeugluftreifen nach Anspruch 6 oder 7, **dadurch gekennzeichnet, dass** der radial innere Zonenteil (9"b), im in der Symmetrieebene (E₁) liegenden Querschnitt betrachtet, eine Krümmung aufweist, welche vom durch die maximal ausgelenkte Stelle verlaufendem Niveau (N₈) in Richtung zum Einschnittgrund (8c) auf progressive Weise zunimmt.

9. Fahrzeugluftreifen nach einem der Ansprüche 6 bis 8, **dadurch gekennzeichnet, dass** die Verkeilungsstruktur (9) am Niveau (N₈), welches durch die maximal ausgelenkte Stelle der inneren Strukturzone (9^{II}) verläuft, in Form einer harmonischen Welle sowie über 1,5 Wellenlängen (λ) verläuft.

10. Fahrzeugluftreifen nach Anspruch 9, **dadurch gekennzeichnet, dass** die Wellenlängen (λ) der harmonischen Welle 500% bis 1000%, insbesondere 600% bis 800%, der Breite (b_{E}) des Einschnittes (6) beträgt.

11. Fahrzeugluftreifen nach Anspruch 9 oder 10, **dadurch gekennzeichnet, dass** die harmonische Welle eine Amplitude (A) von 90% bis 200%, insbesondere von 100% bis 150%, bevorzugt von 115% bis 135%, der Breite (b_{E}) des Einschnittes (6) aufweist.

12. Fahrzeugluftreifen nach einem der Ansprüche 1 bis 11, **dadurch gekennzeichnet, dass** zu den Einschnitten (6) Einschnitte (6) gehören, welche jeweils zwei der Verkeilungsstrukturen (9) aufweisen, wobei sich die eine Verkeilungsstruktur (9) in der einen Einschnitthälfte und die andere Verkeilungsstruktur (9) in der anderen Einschnitthälfte befindet, wobei sich die Eischnitthälften durch Teilung des Einschnittes (6) in Draufsicht ergeben.

13. Fahrzeugluftreifen nach Anspruch 12, **dadurch gekennzeichnet, dass** die Verkeilungsstrukturen (9) derart ausgebildet sind, dass diese durch eine Drehung um 180° um eine in radialer Richtung sowie im Bereich zwischen den Verkeilungsstrukturen (9) verlaufende Achse (A₁) ineinander überführbar sind.

14. Fahrzeugluftreifen nach einem der Ansprüche 1 bis 13, **dadurch gekennzeichnet, dass** zu den Einschnitten (6) Einschnitte (6) gehören, welche die zugehörigen Profilpositive (4, 5) durchqueren.

15. Fahrzeugluftreifen nach einem der Ansprüche 1 bis 14, **dadurch gekennzeichnet, dass** zu den Einschnitten (6) Einschnitte (6) gehören, welche jeweils einen den Einschnittgrund (8c) mitumfassenden, zur radialen Richtung unter einem Winkel von 0° bis 3° verlaufenden, radial inneren Einschnittabschnitt (6^{III}) und einen an diesen anschließenden zur radialen Richtung unter einem Winkel (α) von 15° bis 35°, insbesondere von 20° bis 30°, verlaufenden weiteren Einschnittabschnitt (6^{II}) aufweisen, wobei sich die Verkeilungsstruktur(en) (9) im radial inneren Einschnittabschnitt (6^{III}) befindet bzw. befinden.

## Claims

1. Pneumatic vehicle tyre comprising a tread with profile positives (4, 5), which are provided with sipes (6) which in plan view run at an angle of 0° to 50° to the axial direction, each have a width (b_{E}) of 0.4 mm to 2.0 mm, a maximum depth (t_{E}) of 70% to 100% of the profile depth, a sipe base (8c) and two sipe walls (8a, 8b) with at least one local wedging structure (9), which is spaced apart from the tread periphery and does not reach as far as the tread periphery, wherein the wedging structure (9) is formed by two mutually opposite, corresponding, continuously curved wall portions (10) of the sipe walls (8a, 8b) and wherein unstructured areas (10') of the sipe walls (8a, 8b) adjoin the continuously curved wall portions (10), **characterized**
**in that** the wedging structure (9), seen looking towards the sipe walls (8a, 8b), is configured in the form of a segment of a circle, in particular in the form of a semicircle, and is made up of an inner structure zone (9^{II}), which is bowed out in a dome shape, and an outer structure zone (9^{I}), which runs around the inner structure zone in a U shape, is bowed out oppositely to the inner structure zone (9^{II}) and has U-legs pointing towards the tread periphery, with the result that the continuously curved wall portion (10) of the one sipe wall (8a, 8b) plays a part in delimiting a U-shaped projection (11^{II}) and the continuously curved wall portion (10) of the other sipe wall (8a, 8b) plays a part in delimiting a dome-shaped projection (11^{I}) protruding into the U-shaped projection (11^{II}).

2. Pneumatic vehicle tyre according to Claim 1, **characterized in that** the complete wedging structure (9) is formed radially inside a depth level (N) which runs at a constant depth (T_{N}) with respect to the tread periphery, determined in the radial direction, of at least 20%, in particular of at least 25%, preferably of at least 35%, of the maximum depth (t_{E}) of the sipe (6).

3. Pneumatic vehicle tyre according to Claim 1 or 2, **characterized in that** the wedging structure (9) has a plane of symmetry (E₁) running in the radial direction and in plan view perpendicularly to the sipe midline (m_{E}) of the sipe (6).

4. Pneumatic vehicle tyre according to Claim 3, **characterized in that** the wedging structure (9), seen in the cross section lying in the plane of symmetry (E₁), has with respect to the sipe midplane (M_{E}) in the radial direction a height (hz) of 35% to 70%, in particular of 40% to 65%, preferably of 45% to 60%, particularly preferably of 50% to 60%, of the maximum depth (t_{E}) of the sipe (6).

5. Pneumatic vehicle tyre according to Claim 4, **characterized in that** the inner structure zone (9^{II}), seen in the cross section lying in the plane of symmetry (E₁), has with respect to the sipe midplane (M_{E}) in the radial direction a height (h") of 55% to 65% of the height (hz) of the wedging structure (9).

6. Pneumatic vehicle tyre according to one of Claims 3 to 5, **characterized in that** the inner structure zone (9^{II}), seen in the cross section lying in the plane of symmetry (E₁), has a level (N₈), running at a constant depth, determined in the radial direction, through its maximally deflected point, that divides the inner structure zone (9^{II}) into a radially outer zone part (9^{II}a) and a radially inner zone part (9"b), wherein, seen in the cross section mentioned, the radially inner zone part (9"b) is configured as curved less - than the radially outer zone part (9^{II}a) - with respect to the sipe midplane (M_{E}).

7. Pneumatic vehicle tyre according to Claim 6, **characterized in that** the radially inner zone part (9"b), seen in the cross section lying in the plane of symmetry (E₁), is configured as longer than the radially outer zone part (9^{II}a) in the radial direction.

8. Pneumatic vehicle tyre according to Claim 6 or 7, **characterized in that** the radially inner zone part (9"b), seen in the cross section lying in the plane of symmetry (E₁), has a curvature which increases in a progressive way from the level (N₈), running through the maximally deflected point, in the direction of the sipe base (8c).

9. Pneumatic vehicle tyre according to one of Claims 6 to 8, **characterized in that**, at the level (N₈), which runs through the maximally deflected point of the inner structure zone (9^{II}), the wedging structure (9) runs in the form of a harmonic wave and over 1.5 wave lengths (λ).

10. Pneumatic vehicle tyre according to Claim 9, **characterized in that** the wave length (λ) of the harmonic wave is 500% to 1000%, in particular 600% to 800%, of the width (b_{E}) of the sipe (6).

11. Pneumatic vehicle tyre according to Claim 9 or 10, **characterized in that** the harmonic wave has an amplitude (A) of 90% to 200%, in particular of 100% to 150%, preferably of 115% to 135%, of the width (b_{E}) of the sipe (6).

12. Pneumatic vehicle tyre according to one of Claims 1 to 11, **characterized in that** the sipes (6) include sipes (6) which each have two of the wedging structures (9), wherein the one wedging structure (9) is in the one sipe half and the other wedging structure (9) is in the other sipe half, wherein the sipe halves are obtained in plan view by dividing the sipe (6).

13. Pneumatic vehicle tyre according to Claim 12, **characterized in that** the wedging structures (9) are formed in such a way that they can be transposed into one another by turning by 180° about an axis (A₁) running in the radial direction and in the region between the wedging structures (9).

14. Pneumatic vehicle tyre according to one of Claims 1 to 13, **characterized in that** the sipes (6) include sipes (6) which cross through the associated profile positives (4, 5).

15. Pneumatic vehicle tyre according to one of Claims 1 to 14, **characterized in that** the sipes (6) include sipes (6) which each have a radially inner sipe portion (6^{III}), which encompasses the sipe base (8c) and runs at an angle to the radial direction of 0° to 3°, and a further sipe portion (6^{II}), which adjoins the radially inner sipe portion and runs at an angle (α) to the radial direction of 15° to 35°, in particular of 20° to 30°, wherein the wedging structure(s) (9) is or are in the radially inner sipe portion (6^{III}).

## Revendications

1. Pneumatique de véhicule avec une bande de roulement avec des éléments positifs de profil (4, 5) qui sont pourvus d'entailles (6) s'étendant en vue de dessus selon un angle de 0° à 50° par rapport à la direction axiale, qui présentent respectivement une largeur (b_{E}) de 0,4 mm à 2,0 mm, une profondeur maximale (t_{E}) de 70 % à 100 % de la profondeur de profil, un fond d'entaille (8c) et deux parois d'entaille (8a, 8b) avec au moins une structure de calage locale (9) espacée de la périphérie de la bande de roulement, ne s'étendant pas jusqu'à la périphérie de la bande de roulement, la structure de calage (9) étant formée par deux sections de paroi (10) opposées l'une à l'autre, correspondantes, courbées en continu des parois d'entaille (8a, 8b), et des surfaces non structurées (10') des parois d'entaille (8a, 8b) étant adjacentes aux sections de paroi (10) courbées en continu,
**caractérisé en ce que**
la structure de calage (9), vue sur les parois d'entaille (8a, 8b), est réalisée en forme de segment de cercle, notamment en forme de demi-cercle, et se compose d'une zone de structure intérieure (9^{II}) bombée en forme de dôme et d'une zone de structure extérieure (9^{I}) qui entoure celle-ci en forme de U, bombée à l'opposé de la zone de structure intérieure (9^{II}) avec des branches de U orientées vers la périphérie de la bande de roulement, de telle sorte que la section de paroi (10) courbée en continu de l'une des parois d'entaille (8a, 8b) délimite une saillie en forme de U (11^{II}) et la section de paroi (10) courbée en continu de l'autre paroi d'entaille (8a, 8b) délimite également une saillie en forme de dôme (11^{I}) pénétrant dans la saillie en forme de U (11^{II}).

2. Pneumatique de véhicule selon la revendication 1, **caractérisé en ce que** la structure de calage complète (9) est configurée radialement à l'intérieur d'un niveau de profondeur (N) qui s'étend par rapport à la périphérie de la bande de roulement à une profondeur constante (T_{N}), déterminée dans la direction radiale, d'au moins 20 %, notamment d'au moins 25 %, de préférence d'au moins 35 %, de la profondeur maximale (t_{E}) de l'entaille (6).

3. Pneumatique de véhicule selon la revendication 1 ou 2, **caractérisé en ce que** la structure de calage (9) présente un plan de symétrie (E₁) s'étendant dans la direction radiale et, en vue de dessus, perpendiculairement à la ligne médiane d'entaille (m_{E}) de l'entaille (6).

4. Pneumatique de véhicule selon la revendication 3, **caractérisé en ce que** la structure de calage (9), vue en coupe transversale située dans le plan de symétrie (E₁), présente, par rapport à la surface médiane d'entaille (M_{E}) dans la direction radiale, une hauteur (hz) de 35 % à 70 %, notamment de 40 % à 65 %, de préférence de 45 % à 60 %, de manière particulièrement préférée de 50 % à 60 %, de la profondeur maximale (t_{E}) de l'entaille (6).

5. Pneumatique de véhicule selon la revendication 4, **caractérisé en ce que** la zone de structure intérieure (9^{II}), vue en coupe transversale située dans le plan de symétrie (E₁), présente, par rapport à la surface médiane d'entaille (M_{E}), dans la direction radiale, une hauteur (h^{II}) de 55 % à 65 % de la hauteur (hz) de la structure de calage (9).

6. Pneumatique de véhicule selon l'une quelconque des revendications 3 à 5, **caractérisé en ce que** la zone de structure intérieure (9^{II}), vue en coupe transversale située dans le plan de symétrie (E₁), présente un niveau (N₈) passant par son point de déflexion maximale à une profondeur constante déterminée dans la direction radiale, qui divise la zone de structure intérieure (9^{II}) en une partie de zone radialement extérieure (9^{II}a) et une partie de zone radialement intérieure (9^{II}b), la partie de zone radialement intérieure (9^{II}b) - par rapport à la partie de zone radialement extérieure (9^{II}a) - étant réalisée avec une courbure plus faible par rapport à la surface médiane d'entaille (M_{E}), vu dans la coupe transversale mentionnée.

7. Pneumatique de véhicule selon la revendication 6, **caractérisé en ce que** la partie de zone radialement intérieure (9^{II}b), vue en coupe transversale située dans le plan de symétrie (E₁), est réalisée plus longue dans la direction radiale par rapport à la partie de zone radialement extérieure (9^{II}a).

8. Pneumatique de véhicule selon la revendication 6 ou 7, **caractérisé en ce que** la partie de zone radialement intérieure (9^{II}b), vue en coupe transversale située dans le plan de symétrie (E₁), présente une courbure qui augmente progressivement depuis le niveau (N₈) passant par le point de déflexion maximale en direction du fond d'entaille (8c).

9. Pneumatique de véhicule selon l'une quelconque des revendications 6 à 8, **caractérisé en ce que** la structure de calage (9) se présente sous la forme d'une onde harmonique au niveau (N₈) qui passe par le point de déflexion maximale de la zone de structure intérieure (9^{II}), ainsi que sur 1,5 longueur d'onde (λ).

10. Pneumatique de véhicule selon la revendication 9, **caractérisé en ce que** les longueurs d'onde (λ) de l'onde harmonique représentent 500 % à 1 000 %, notamment 600 % à 800 %, de la largeur (b_{E}) de l'entaille (6).

11. Pneumatique de véhicule selon la revendication 9 ou 10, **caractérisé en ce que** l'onde harmonique présente une amplitude (A) de 90 % à 200 %, notamment de 100 % à 150 %, de préférence de 115 % à 135 %, de la largeur (b_{E}) de l'entaille (6).

12. Pneumatique de véhicule selon l'une quelconque des revendications 1 à 11, **caractérisé en ce que** les entailles (6) comprennent des entailles (6) qui présentent chacune deux des structures de calage (9), l'une des structures de calage (9) se trouvant dans une moitié d'entaille et l'autre structure de calage (9) se trouvant dans l'autre moitié d'entaille, les moitiés d'entaille étant obtenues en divisant l'entaille (6) en vue de dessus.

13. Pneumatique de véhicule selon la revendication 12, **caractérisé en ce que** les structures de calage (9) sont configurées de telle sorte qu'elles peuvent être transférées l'une dans l'autre par une rotation de 180° autour d'un axe (A₁) s'étendant dans la direction radiale ainsi que dans la zone entre les structures de calage (9).

14. Pneumatique de véhicule selon l'une quelconque des revendications 1 à 13, **caractérisé en ce que** les entailles (6) comprennent des entailles (6) qui traversent les éléments positifs de profil (4, 5) associés.

15. Pneumatique de véhicule selon l'une quelconque des revendications 1 à 14, **caractérisé en ce que** les entailles (6) comprennent des entailles (6) qui présentent chacune une section d'entaille radialement intérieure (6^{III}) entourant le fond d'entaille (8c), s'étendant selon un angle de 0° à 3° par rapport à la direction radiale, et une autre section d'entaille (6^{II}) se raccordant à celle-ci, s'étendant par rapport à la direction radiale selon un angle (α) de 15° à 35°, notamment de 20° à 30°, la ou les structures de calage (9) se trouvant dans la section d'entaille radialement intérieure (6^{III}).
